# EUROPÄISCHE PATENTSCHRIFT

(11) **EP 2 161 226 B1**
(45) Veröffentlichungstag und Bekanntmachung des Hinweises auf die Patenterteilung: **16.11.2011**
(21) Anmeldenummer: 08015504.7
(22) Anmeldetag: 03.09.2008
(51) Int. Cl.: B65G 47/51, B65G 47/53

(54) **Vorrichtung zum Speichern von recheckigen Objekten**
Device for buffering of rectangular objects
Dispositif pour le stockage d'objets rectangulaires

(43) Veröffentlichungstag der Anmeldung: 10.03.2010
(73) Patentinhaber: Ruberg, Bernhard, Dipl.-Ing., 33098 Paderborn (DE)
(72) Erfinder: Ruberg, Bernhard, Dipl.-Ing., 33098 Paderborn (DE)
(74) Vertreter: Ostermann, Thomas

(56) Entgegenhaltungen:
- WO-A-2006/137096
- DE-A1- 3 343 809
- FR-A- 2 718 422
- US-A- 3 734 267

## Beschreibung

Die Erfindung betrifft eine Vorrichtung zum Zwischenspeichern von mehreren gleichartigen Objekten mit jeweils annährend rechteckiger oder quadratischer Grundfläche, insbesondere von Getränkekartons, aus einer Förderlinie auf mindestens einer ein- und ausgangsseitig staugesteuerten Speicherbahn.

Derartige Zwischenspeicher sind in der Abfüll- und Verpackungsindustrie bekannt. Sie dienen zur kurzzeitigen Aufnahme von quasi kontinuierlich gefertigten Objekten, wenn in einer der nachfolgenden Prozessstufen, wie Kartonierung und Palettierung, Störungen auftreten, sodass keine Objekte abgenommen werden können.

Als klassische Zwischenspeicher sind lange Transporteure mit mehreren Zwischenantrieben, z.B. als nebeneinander liegenden Transportbahnschlaufen, bekannt, die im Normalbetrieb mit hoher Fördergeschwindigkeit arbeiten, im Störfall zunächst die Geschwindigkeit der ersten Transportbahnsektion zum Aufstauen der. Fördergüter drosseln und bei Erreichen von ca. 65 % Befüllung diese abschalten und dann die vorgelagerte Transportbahnsektion analog zum Stauen der Fördergüter drosseln. Die Speicherkapazität ist erschöpft, wenn der letzte Transporteur mit ca. 85 % belegt ist.

Nach Behebung der Störung wird der Stau durch Regeln der Fördergeschwindigkeiten wieder abgebaut, indem die Überkapazität der nachfolgenden Aggregate ausgeschöpft wird.

Nachteil dieser Ausprägung ist der hohe Platzbedarf, der enormer technische Aufwand an Antriebsund Steuermitteln sowie der Energieverbrauch und der Verschleiß und die schlechte Zugänglichkeit bei Störfällen.

Eine Grundforderung an Zwischenspeicher ist es, unnötig lange Speicherzeiten von Objekten zu vermeiden, um ein Verderben temperaturempfindlicher Produkte zu verhindern. Das first in first out Prinzip muss deshalb gewahrt werden.

Eine vorrichtung gemäß dem Oberbegriff des Anspruchs 1 ist aus dem Dokument US-A-3734267 bekannt.

Aufgabe der Erfindung ist es, einen Zwischenspeicher mit geringem Flächenbedarf, hoher Speicherkapazität, einer geringeren Zahl von Antriebs- und Steuerelementen, besserer Zugänglichkeit und schonenderen Behandlung der Objekte insbesondere geringer Reibungsbeaufschlagung der Böden der Objekte, zu schaffen.

Die Lösung besteht darin, dass jede Speicherbahn aus einem Speicherband besteht, dass neben der Förderlinie angeordnet ist und in einer Bandförderrichtung quer zu dieser gesteuert angetrieben ist, dessen Bandbreite mindestens einer Lange einer aufgestauten Objektreihe mehrer Objekt entspricht und dessen Förderlänge in der Bandförderrichtung mehreren nacheinander aufgegebenen Objektreihen einen Speicherplatz bietet, und dass an der Förderlinie aufgabeseitig des Speicherbands ein Zeilenaufgabeschieber und abgabeseitig des Speicherbands für jeweils eine dort stehende Objektreihe eine Halte- und Abgabevorrichtung an einem quer zu diesem transportierenden Linearförderer oder Linearzwischenförderer angeordnet sind. Vorteilhafte Ausgestaltungen sind in den Unterausdrücken gegeben.

In einer ersten Ausgestaltung des Zwischenspeichers besteht dieser aus nur einem Speicherband mit den zugehörigen Aufgabe- und Abgabevorrichtungen. Von dem Linearabförderer an der Abgabevorrichtung ist eine Ableitung der Objekte in die durchgehende Förderlinie mittels einer Weiche ausgebildet.

Sobald ein Stau in den nachfolgenden Stufen beseitigt ist, werden die zwischengespeicherten Objekte zeilenweise abgegeben und der Objektstrom läuft solange über den Zwischenspeicher, bis dieser minimal belegt ist. Dann wird das Aufschieben der Objekte gestoppt, der Zwischenspeicher wird vollständig entleert und die Objekte werden am Zwischenspeicher vorbei gefördert (Bypass-Betrieb).

Alternativ kann der Speicher auch entleert werden, indem er nach Beseitigung des Staus in den nachfolgenden Stufen von den Objekten umfahren wird und in Lücken des durchgehenden Objektflusses alternierend Objektschlangen von der Abgabevorrichtung über eine Weiche eingeschleust werden.

In einer zweiten Ausführung doppelter Kapazität sind zwei Speicherbänder gegenläufig nebeneinander angeordnet, die durch einen linearen Zwischenförderer miteinander verbunden sind. Ausgangsseitig führt der Abförderer des zweiten Speicherbands direkt auf die durchgehende Förderlinie.

Die Förderlinie ist ein Linearförderer, der die Objekte seriell fördert.

Für die Aufgabe der Objekte werden diese auf der durchgehenden Förderlinie mit einem Linienstopper aufgestaut und bei voller Objektzeile zulaufseitig gesperrt, sodass die Objektzeile frei von einem Staudruck von dem Zeilenaufgabeschieber auf das Speicherband geschoben werden kann.

Der Linienstopper wird immer dann betätigt, wenn abstromseitig eine Störmeldung anliegt, also z.B. der Kartonierer oder der Palettierer zeitweilig nicht arbeiten und keine Objekte aufnehmen.

In einer bevorzugten Ausführung ist die Halte- und Abgabevorrichtung mit mechanischen Mitteln ausgestaltet, die aus einem plattenförmigen Rückhalter, der mit einem Hub-, Senk- und Schwenkantrieb verbunden ist, und einem plattenförmigen Fänger, der mit einem Schwenkantrieb verbunden ist, und ggf. einem zu versenkenden Kantenstopper bestehen.

Diese Mittel sind so weit hinter dem Ende des Speicherbandumlenkung angeordnet, dass die erste Objektreihe sich vom Umlenkberreich zur Seite neigt, wenn der Rückhalter hochgezogen ist, und die Frontseite der Objektreihe sich im geneigten Zustand an den passend geneigt angeordneten Fänger anlehnt. Dadurch entsteht rückseitig der ersten Objektreihe ein Freiraum, in den der Rückhalter ebenso passend geneigt eintaucht. Hierdurch wird die Objektreihe beidseitig großflächig schonend gegriffen. Durch die anschließende parallele Schwenkbewegung von dem Rückhalter und dem Fänger in die Senkrechte wird die Objektreihe wieder über dem Linearförderer aufgerichtet und abgesetzt. In dieser Stellung hat der Rückhalter seine Ausgangstellung wieder erreicht.

Das Heben, Absenken, Verschwenken und Rückschwenken des Rückhalters kann mit einem zentralen Hebantrieb erfolgen, wenn der Rückhalter an seinem obersten Ende an einen Hubtrieb angelenkt ist und er über Fortsätze an Anschlägen oder in Kurvenbahnen geführt wird. Der Fänger ist zweckmäßig um eine weiter oben über der äußersten Kante des Linearförderers liegenden Schwenkachse beweglich gelagert.

Diese Achse kann virtuell sein, wenn ein geeignetes Viergelenk zum Einsatz kommt.

Bei manchen Objektformaten ist es vorteilhaft, fluchtend unterhalb des Rückhalters noch einen Kantenstopper mit einem Hubantrieb anzuordnen, der in der Rückhaltestellung über das Niveau des Speicherbands angehoben ist.

Sowohl die Greifförderung zwischen dem plattenförmigen Rückhalter und den flächigen Fänger als auch die Förderung auf dem Speicherband sind schonend. Dies ist insbesondere bei Getränkekartons vorteilhaft.

Zum einen bewegt das Speicherband die Objekte bis an den Rückhalter und zum anderen werden nachfolgende Objektreihen vom Zeilenaufschieber nur über Teilstrecken des Speicherbandes gefördert, wenn einzelne Objektreihen diskontinuierlich anfallen und abfließen. Die Überprüfung der Förderfunktion auf ihre vollständige Ausführung, insbesondere die Reihenbildung, das Abkippen der Reihe zum Übergeber und die vollständige Abförderung einer übergebenen Objektreihe wird zweckmäßig von Sensoren, wie Lichtschranken, überwacht, sodass eine unzulässig hohe Druckbeanspruchung der Objekte und damit deren Verformung oder Zerstörung vermieden wird und die Funktionsfolgen reibungslos ablaufen.

In einer weiteren Ausgestaltung der Halte- und Abgabevorrichtung kommt statt des Kipp- und Schwenkmechanismus ein Vakuumgreifer zum Einsatz. Dieser besteht aus einer Leiste oder Platte, die für die einzelnen Objekte mit separat gesteuerten und gegen Leckverluste gesicherten Saugnäpfen bestückt ist. Das Vakuum wird diesen gesteuert zugeführt, wenn eine Objektreihe an diesen angestaut ist, wonach die Vakuumleiste oder Platte seitlich über den Linearabförderer gebracht wird, wenn dieser zur Aufnahme frei ist. Nach dem Entlüften des Vakuums erfolgt der lineare Abtransport und danach die Rückführung der Saugnapfleiste oder -platte in die Haltestellung.

Diese recht einfache Anordnung ist besonders dann vorteilhaft, wenn keine Verschmutzung oder Verklebung der Vakuumeinrichtung durch an den Objekten anhaftendes Produkt zu erwarten ist.

Da die Speicherung der Objekte in beiden Richtungen dicht an dicht erfolgt, ist der Grundflächenbedarf um bis zu 80% geringer als bei der eingangs beschriebenen Speicherausführung. Wegen der wenigen bewegten Teile ist der Speicher sehr wartungsarm.

Die Antriebe der Aufgabe- und Abnahmevorrichtungen sind zweckmäßig beidseitig parallellaufend an der Speicherbahn angeordnet.

Vorteilhafte Ausgestaltungen sind in den Figuren 1- 4 dargestellt.
Figur 1 zeigt eine Draufsicht auf eine einzelne Speicherbahn mit einem Linearabförderer.
Figur 2 zeigt eine Draufsicht auf ein Paar verkoppelter gegenläufiger Speicherbahnen.
Figur 3A zeigt 3 Seitenansichten des Halte- und Abgabebereiches einer Speicherbahn in aufeinanderfolgenden Arbeitspositionen Pos.1 bis Pos. 3.
Figur 3B zeigt die gleichen Bereiche in drei weiteren Arbeitspositionen Pos. 4- Pos. 6.
Figur 4 zeigt eine Halte- und Abgabevorrichtung in Seitenansicht mit einer Vakuumplatte.

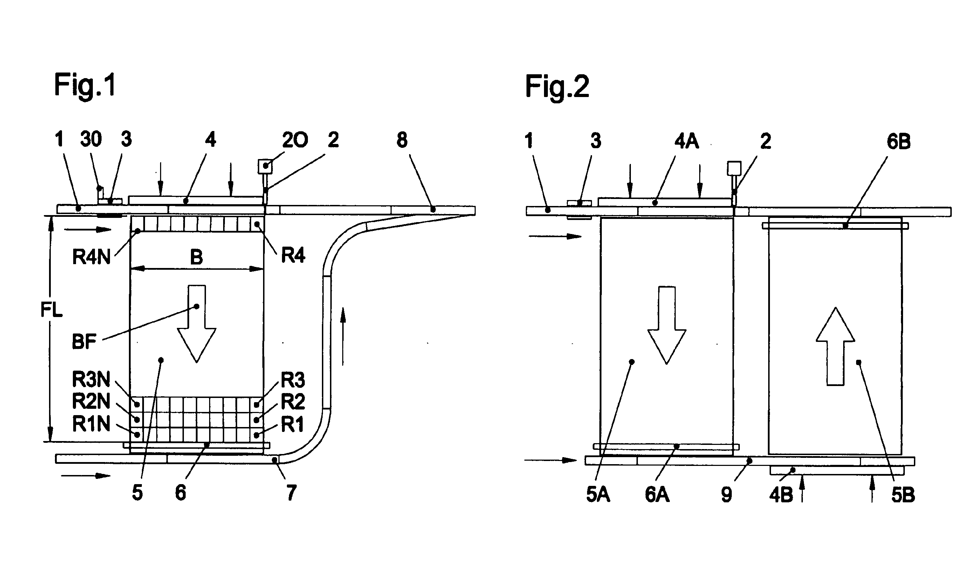

Figur 1 zeigt eine Draufsicht einer Speicherbahn 5, die aus einem Speicherband der Breite B besteht, dass in der Bandförderrichtung BF über eine Förderlänge FL gesteuert bewegbar ist.

Zuführseitig ist vor dem Speicherband 51 eine gerade lineare Förderlinie 1 angeordnet, neben der sich ein Zeilenaufgabeschieber 4 befindet. Auf der Förderlinie 1 werden die aus einer Vorfertigung, z.B. einer Form-, Füll- und Verschlussanlage einer Getränkeabfüllung, die Objekte stetig in loser Folge transportiert und im Normalbetrieb an die nachfolgende Weiterverarbeitungsstation übergeben.

Entsteht ablaufseitig eine Störung, sperrt ein Stopperantrieb 20 mit einem Linienstopper 2 den Objektfluss neben dem Speicherband, und durch Trennung des kontinuierlichen Objektstromes mittels einer Linienstaubremse 3 mit einem Bremsantrieb 30 erfolgt die Staubildung einer Objektreihe R4-R4N mit reproduzierbarer Länge.

Diese wird durch den Zeilenübergabeschieber 4 parallel auf das Speicherband 5 abgepusht, wie dargestellt.

Nach der Rückkehr des Zeilenübergabeschiebers 4 in seine Grundstellung wird die Linienstaubremse 3 wieder gelöst. Das Speicherband 51 fördert die nach und nach auf das Band geschobene Objektreihen jeweils so weit, bis die zuerst aufgegebene Objektreihe R1- R1 N an der Halte- und Abgabevorrichtung 6 anschlägt und die zuletzt aufgegebene Objektreihe R4- R4N den Aufgabebereich neben der Förderlinie 1 verlassen hat. Auf diese Weise wird ein Verschieben der Objekte auf dem Speicherband minimiert. In der Figur 1 sind drei Objektreihen R1- R1N; R2- R2N; R3- R3N aufgestaut; die vierte Reihe befindet sich noch in der Aufgabezone. Wenn keine Staumeldung vorliegt, übergibt die Aufgabevorrichtung 6 die erste Objektzeile R1- R1 N auf den benachbart angeordneten Förderer 7, der die Objekte zur Weiche 8 transportiert, die die Objekte auf die Förderlinie 1 übergibt.

Sobald der Förderbereich neben der Halte- und Aufgabevorrichtung 6 frei ist, wird die nächste Objektreihe dort abgesetzt usw. bis das Speicherband frei ist.

Figur 2 zeigt ein Paar von Speicherbahnen 5A, 5B, die nebeneinander in umgekehrter Richtung fördernd angeordnet sind. Die Förderlinie 1 passiert den ersten Zeilenaufgabeschieber 4A und die zweite Halte- und Abgabevorrichtung 6B. Ein Zwischenförderer 9 führt andererseits an der ersten Halte- und Abgabevorrichtung 6A vorbei und erstreckt sich bis neben den zweiten Zeilenaufgabeschieber 4B.

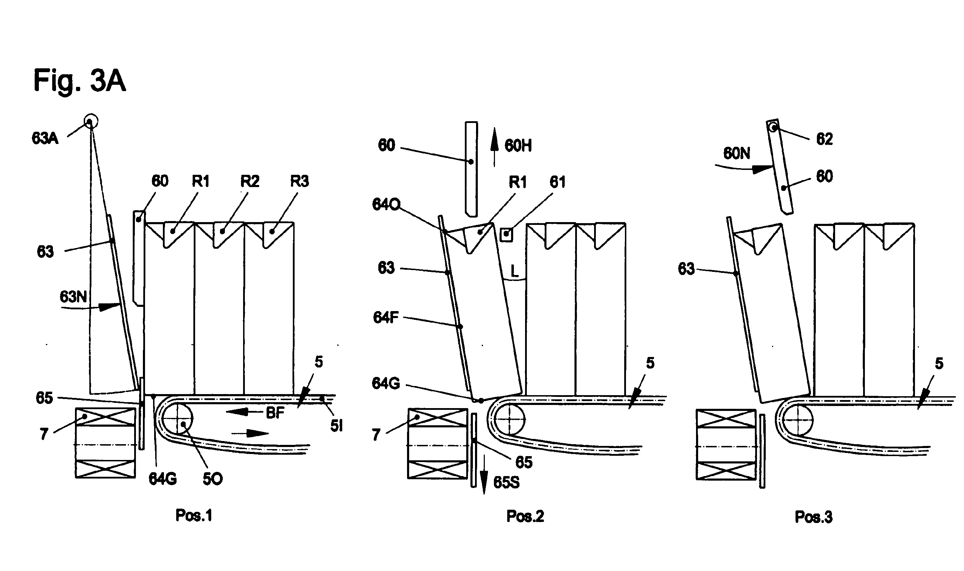

Figur 3A Pos. 1 zeigt die Seitenansicht des Halte- und Abgabebereichs in der Rückhaftestellung der Objektreihen R1- R3, die auf dem Speicherband 51 der Speicherbahn 5 an einem Rückhalter 60 aufgestaut sind.

Dieser ist plattenförmig ausgebildet und liegt flächig von oben vor der zuerst angestauten Objektreihe R1.

Das Speicherband 51 ist über eine Umlenkung 50 geführt, die in der Rückhaltestellung die erste Objektreihe R1 auf weniger als der halben Grundfläche 64G unterstützt.

Neben der Umlenkung des Speicherbands 51 befindet sich in geringem Abstand der Förderer 7. In dem Zwischenraum ist ein Kantenstopper 65 angeordnet, der mit dem Rückhalter 60 fluchtet und vor einem Senk- und Hubantrieb 65S, 65H unter und über das Niveau der Speicherfläche des Speicherbandes 51 gesteuert verstellt wird.

Über dem Linearförderer 7 ist ein plattenförmiger Fänger 63 angeordnet, der mit seinem unteren Ende die erste Objektreihe R1 im unteren Bereich tangiert und sich schräg geneigt über den Linearförderer 7 erstreckt. Der Fänger 63 ist mit einem Neigeantrieb 63N verbunden, der schematisch dargestellt ist und eine Neigung um eine Schwenkachse 63A bewirkt, die über der Außenkante des Linearförderers 7 und über der Höhe der Objektreihe R1 liegt.

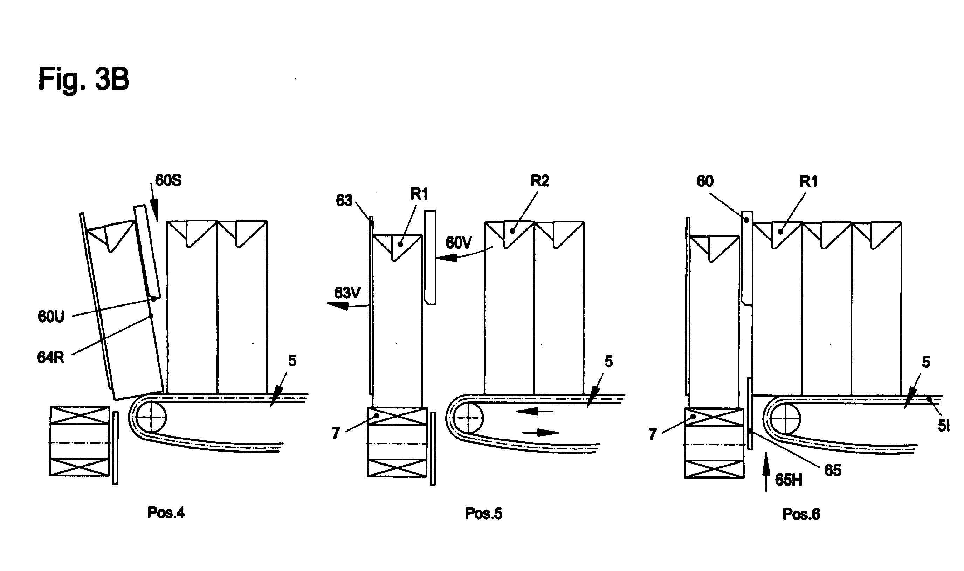

Eine Abgabe der Objektreihe R1 aus dem Speicherbereich erfolgt in mehreren Schritten, von der eine Freigabestellung Pos. 2 gezeigt ist, in der der Rückhalter 60 mit einem Hubantrieb 60H, der schematisch funktional gezeigt ist, über die Objektreihe R1 hochgezogen und der Kantenstopper 65 abgesenkt ist. Durch die Schwerkraft ist die erste Objektreihe R1 mit ihrer Frontseite 64F sich an den Fänger 63 anlehnend abgekippt. Zwischen der ersten und ggf. folgenden Objektreihe ist eine Lücke L entstanden. Das vollständige Abkippen der ersten Objektreihe R1 wird durch eine Lichtschranke 61 überwacht. Sie löst den Übergang in eine Trennstellung Figur 3B, Pos. 4 aus, wobei zuvor in Figur 3A; Pos. 3 gezeigt ist, dass der Rückhalter 60 um eine Schwenkachse 62, die sich am oberen Ende des Rückhalters befindet parallel zur Rückseite 64R der ersten Objektreihe R1 geneigt wird, sodass das untere Ende 60U des Rückhalter 60 hinter diese ragt.

Der weitere Übergang zur Trennstellung Figur 3B; Pos. 4 zeigt eine Absenkung des Rückhalters 60 mit einem schematisch dargestellten Absenkantrieb 60S.
Figur 3B Pos. 5 zeigt eine folgende Übergabestellung, in der der Fänger 63 und der Rückhalter 60 jeweils mit einem Vertikalsteller 63V, 60V, die zwischenstehende Objektreihe R1aufrictitet und auf dem Linearabförderer 7 platziert.
Figur 3B, Pos. 6 zeigt wieder eine Rückhaltestellung, in der der Kantenstopper 65 angehoben ist und das Speicherband 5 die Objektreihen nachgefördert hat.

Sobald die Abförderung der abgesetzten Objektreihe mit dem Förderer 7 erfolgt ist, schwenkt der Fänger 63 wieder in seine geneigt Stellung, wie die Rückhaltestellung Figur 3A, Pos. 1 zeigt.

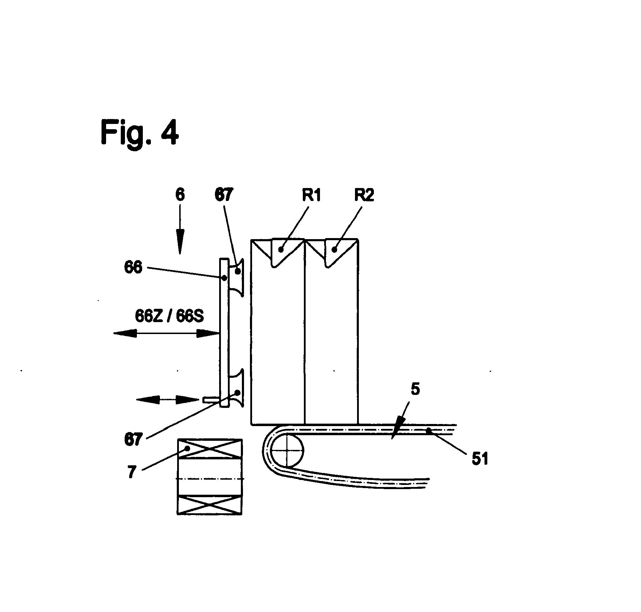

Figur 4 zeigt eine alternative Ausführung der Halte- und Abgabevorrichtung 6, die mit einem Vakuumgreifer arbeitet. Dieser besteht aus einer Vakummleiste oder-platte 66, die mit Saugnäpfen 67 besetzt ist, an denen Vakuum an liegt und die mit Lecksperren ausgestattet sind.

Die Vakuumzuleitung ist mit einem so steuerbaren Entlüftungsventil versehen, dass die Saugnäpfe 67 eine angestaute Objektreihe R1 mit Vakuum ansaugt, während diese mit einem Zugantrieb 66Z auf den Linearförderer 7 abgezogen wird und sie in der Endstellung durch Entlüftung auf dem Förderer 7 wieder freigibt.

Nachdem der Abtransport erfolgt ist, wird die Vakuumplatte 66 mit einem Schubantrieb 66S in eine Rückhaltestellung zurückgeführt. Weitere Fänger und Stopper sowie zugehörige Antriebe sind zu dieser Ausführung nicht vorhanden. Ein Abkippen der Objektreihe entfällt. Der Zugantrieb 66Z und der Schubantrieb 66S sind zweckmäßig durch einen Linearantrieb oder einen pneumatisch oder hydraulisch beaufschlagten Antrieb gebildet.

### Bezugszeichenliste

- 1: Förderlinie
- 2: Linienstopper
- 3: Linienstaubremse
- 4: Zeilenaufgabeschieber
- 5 Speicherbahn 6, 6A, 6B: Halte- u. Angabevorrichtung
- 7: Linearabförderer
- 8: Weiche
- 9: Linearzwischenförderer
- 20: Stopperantrieb
- 30: Bremsantrieb
- 50: Umlenkwalze
- 51: Speicherband
- 60: Rückhalter
- 60H: Hubantrieb zu 60
- 60S: Absenkantrieb zu 60
- 60N: Neigeantrieb zu 60
- 60V: Vertikalsteller zu 60
- 60U: Unteres Ende von 60
- 61: Lichtschranke
- 62: Schwenkachse zu 60
- 63: Fänger
- 63A: Schwenkachse zu 63
- 63N: Neigeantrieb zu 63
- 63V: Vertikalsteller zu 63
- 640: Oberseite R1
- 64G: Grundfläche R1
- 64F: Frontseite R1
- 64R: Rückseite R1
- 65: Kantenstopper
- 65S: Absenkantrieb zu 65
- 65H: Hubantrieb zu 65
- 66: Vakuumleiste oder -platte
- 66S: Schubantrieb zu 66
- 66Z: Zugantrieb zu 66
- 67: Saugnäpfe
- B: Bandbreite
- BF: Bandförderrichtung
- FL: Förderlänge
- L: Lücke R1-R2

## Patentansprüche

1. Vorrichtung zum Zwischenspeichern von mehreren gleichartigen Objekten mit jeweils rechteckartiger Grundfläche, insbesondere von Getränkekartons, aus einer Förderlinie auf mindestens einer ein- und ausgangsseitig staugesteuerten Speicherbahn (5), wobei
jede Speicherbahn (5, 5A, 5B) (51) besteht aus einem Speicherband das neben der Förderlinie (1) angeordnet ist und in einer Bandförderförderrichtung (BF) angetrieben ist, dessen Bandbreite (B) mindestens einer Lange einer aufgestauten Objektreihe (R1- R1 N) mehrerer Objekte entspricht und dessen Förderlänge (FL) in Bandförderrichtung (BF) mehreren nacheinander aufgegebenen Objektreihen (R1- R1N....R4- R4N) einen Speicherplatz bietet **dadurch gelennzeichnet, dass** an der Förderlinie (1) aufgabeseitig des Speicherbands (51) ein Zeilenaufgabeschieber (4) und abgabeseitig des Speicherbands (51) für jeweils eine anstehende Objektreihe (R1,R1') eine Abgabevorrichtung (6,6A,6B) an einem quer zu diesem transportierendem Linearförderer (7) oder Linearzwischenförderer (9) angeordnet ist.

2. Vorrichtung nach Anspruch 1,
**dadurch gekennzeichnet,**
**dass** der Linearförderer (7) ablaufseitig der Halte- und Abgabevorrichtung über eine Weiche (8) mit der Förderlinie verbunden ist.

3. Vorrichtung nach Anspruch 1,
**dadurch gekennzeichnet,**
**dass** jeweils mindestens zwei der Speicherbahnen (5A, 5B) paarweise nebeneinander gegenläufig angetrieben angeordnet sind und der Zwischenförderer (9) ablaufseitig jeweils der ersten paarigen Speicherbahn (5A) mittels der Halte- und Abgabevorrichtung (6A) und zulaufseitig der zweiten paarigen Speicherbahn (5B) mit einem weiteren Zeilenaufgabeschieber (4B) verbunden ist und die zweite Speicherbahn (5B) abgabeseitig mit der Förderlinie (1) mittels einer zweiten Halte- und Abgabevorrichtung (6B) verbunden ist.

4. Vorrichtung nach Anspruch 1,
**dadurch gekennzeichnet,**
**dass** an der Förderlinie (1) ablaufseitig des Zeilenaufgabeschiebers (4) ein gesteuerter Linienstopper (2) und zulaufseitig eine Linienstaubremse (3) angeordnet sind.

5. Vorrichtung nach Anspruch 4,
**dadurch gekennzeichnet,**
**dass** der Linienstopper (2) immer dann aktiviert ist, wenn ablaufseitig eine Störung dedektiert ist, und danach die Linienstaubremse (3) immer dann aktiviert ist, wenn eine komplette Objektreihe (R4- R4N) vor dem Zeilenaufschieber (4) angestaut ist, und danach der Zeilenaufgabeschieber (4) aktiviert ist, nach dessen Zeilenaufgabe dieser und die Linienstaubremse (3) deaktiviert sind.

6. Vorrichtung nach Anspruch 1,
**dadurch gekennzeichnet,**
**dass** das Speicherband (51) abgabeseitig über eine Umlenkung geführt ist und die Halte- und Abgabevorrichtung (6)
- in einer Rückhaltestellung mit einem zur Umlenkung (50) soweit versetzt angeordneten Rückhalter (60) die angestaute Objektreihe (R1, R1') jeweils nur noch zu weniger als der Hälfte ihrer Grundfläche (64G) abstützt und
- in einer Freigabebestellung der Rückhalter (60) über die Objektreihe (R1) ausgehoben ist, sodass diese sich zum Linienförderer (7) hin neigt, wo sie von einem Fänger (63) schräg gehalten wird und eine Lücke zur nachfolgenden Objektreihe (R2) entsteht und
- in einer Trennstellung der Rückhalter (60) hinter die geneigten Objektreihe (R1) ggf. in die Lücke (L) gesenkt wird und
- in einer Übergabestellung der Rückhalter (60) mit dem Fänger (63) die dazwischenstehende Objektreihe (R1) auf den Förderer (7) verlagert, wonach das Speicherband (51) die nachfolgende Objektreihe (R2) an den Rückhalter (60) in die Rückhaltestellung schiebt.

7. Vorrichtung nach Anspruch 6,
**dadurch gekennzeichnet,**
**dass** der Rückhalter (60) mit der Rückhaltestellung etwa die obere Hälfte der Objektreihe (R1) seitlich abstützt und mit einem Hubantrieb (60H) in die Freigabestellung verbracht wird und mit einem Neigungsantrieb (60N) in eine Parallelstellung zur geneigten Objektreihe (R1) und mit einem Absenkantrieb (60S) in die Trennstellung verbracht wird und mit einem Vertikalsteller (60V) in die Übergabe- und Rückhaltestellung verbracht wird.

8. Vorrichtung nach Anspruch 7,
**dadurch gekennzeichnet,**
**dass** der Hubantrieb (60H) mit dem Absenkantrieb (60S) sowie des Neigungsantriebs (60 N) mit dem Vertikalsteller (60V) durch einen zentral angebrachten kinematischen Mechanismus gebildet sind oder aus zwei kombiniert bewegungsgesteuerten Antrieben bestehen.

9. Vorrichtung nach Anspruch 7,
**dadurch gekennzeichnet,**
**dass** der Rückhalter (60) ein gerundetes oder mit Rollen besetztes Ende (60u) hat.

10. Vorrichtung nach einem der Ansprüche 6-9,
**dadurch gekennzeichnet,**
**dass** der Fänger (63) eine schwenkbar gelagerte Platte ist, die sich frontseitig fast gänzlich über die auszuspeichernde Objektreihe (R1) erstreckt, während diese von der gekippten Freigabestellung in die vertikale übergabestellung verbracht wird, wobei der Fänger (63) um eine Schwenkachse (63A) verschwenkt wird, die fluchtend mit einer Außenseite des Linienabförderers (7) liegt.

11. Vorrichtung nach einem der Ansprüche 6-10,
**dadurch gekennzeichnet,**
**dass** die Halte- und Abgabevorrichtung (6) einen Kantenstopper (65) umfasst, der zwischen dem Speicherband (51) und dem Linearabförderer (7) angeordnet ist und mit einem Hubantrieb (65H) und Senkantrieb (65S) verbunden ist, der jeweils nur in der Rückhaltestellung den Kantenstopper (65) über das Nivea des Speicherbandes (51) in einer Flucht mit dem Rückhalter (60) anhebt und ansonsten darunter absenkt.

12. Vorrichtung nach einem der Ansprüche 6-11,
**dadurch gekennzeichnet,**
**dass** das Speicherband (51) jeweils in der Rückhaltestellung solange angetrieben ist, bis eine Objektreihe (R1) den Rückhalter (60) tangiert.

13. Vorrichtung nach einem der Ansprüche 6-12,
**dadurch gekennzeichnet,**
**dass** der Rückhalter (60) dann aus der Freigabestellung in die Trennstellung (Pos. 4) verbracht wird, wenn eine Lichtschranke (61) die Lücke (L) hinter der abgekippten Objektreihe (R1) detektiert.

14. Vorrichtung nach einem der Ansprüche 1 - 4,
**dadurch gekennzeichnet,**
**dass** die Halte- und Abgabevorrichtung (6) aus einer Reihe von Saugnäpfen (67) an einer Vakuumleiste oder platte (66) mit einem Schubantrieb (66S) besteht, der diese jeweils in einer Rückhaltestellung auf dem Speicherband (51) solange hält, bis die nächste Objektreihe (R1) an den Saugnäpfen (67) augestaut ist, und daß die Vakuumleiste oder -platte (66) mit einem Zugantrieb (66Z) verbunden ist, der diese zusammen mit der Objektreihe (R1) nach Beaufschlagung mit Vakuum auf den Linearförderer (7) oder den Linearzwischenförderer (9) zieht, durch Wegschalten des Vakuums die Objektreihe freigibt und nachdem diese durch den Linearförderer (9) weggefördert ist durch den Schubantrieb (66S) wieder in die Rückhaltestellung verschoben wird

## Claims

1. Device for buffering of several identical objects each having a rectangular base area, in particular of beverage cartons or boxes, from a conveyor line on at least one buffering track that is jam-controlled on an inlet and outlet side wherein each buffering track (5, 5A, 5B) comprises a buffering belt (5) which is disposed aside said conveyor line (1), which is driven to move in a belt conveyor direction (BF), whose belt width (B) conforms to at least the length of one row of objects (R1-R1N) comprising a plurality of jammed-up objects and whose conveying length (FL) in belt conveying direction (BF) is such as to provide buffeting space for a plurality of successively charged rows of objects (R1-R1N - R4-R4N), **characterized in that** the conveyor line (1) is at the charging end of the suffering belt (51) provided with a line charging pusher (4) and at the discharging end of said buffering belt (51) a discharging device (66A, 68) for one row of objects rows (R1, R1') at a time which device is arranged at a linear conveyor (7) adapted to transport in a direction transverse thereto or a linear intermediate conveyor (9).

2. Device according to Claim 1, **characterized in that** the linear conveyor (7) is connected to said conveyor line via a switch (8) on the discharging side of a, retaining and discharging device.

3. Device according to Claim 1, **characterized in that** at least two of said buffering tracks (5A, 5B) are in each case driven pairwise in opposite directions, that the intermediate conveyor (9) is on the discharging side connected to the first buffering track (5A) of said pair of tracks via the retaining and discharging device (6A) and on the charging side of the second buffering track (5B) of said pair connected to a further line charging pusher (4B), and that the second buffering track (5B) is on the discharging side connected to the conveyor line (1) via a second retaining and discharging device (6B).

4. Device according to Claim 1, **characterized in that** at the conveyor line there are provided a controlled line stopper (2) on the discharging side of the line charging pusher (4) and a line jam brake (3) on the charging side thereof.

5. Device according to Claim 4, **characterized in that** the line stopper (2) is activated whenever a trouble conditions is being detected on the discharging side and that subsequently the line jam brake is activated wherever a complete row of objects (R4-R4M) has jammed up in front of the line charging pusher (4), that thereafter the line charging pusher (4) is activated and that after charging a row of objects said pusher and the line jam brake (3) are again deactivated.

6. Device according to Claim 1, **characterized in that** the buttering belt (51) is deviated on the discharging side, that while in a retaining state said retaining and discharging device (6) backs up the row of objects (R1, R1') over just less than half the length of the base length (64G) thereof with the aid of a retainer means (60), that while in a releasing position said retainer means (60) is raised above said row of objects (R1) to incline toward the line conveyor (7) such that said row is kept in an inclined position by a catcher means (63) and a gap is formed against the next row of objects (R2), that in a separating position the retainer means ((60) may be lowered into said gap (L) behind said inclined row of objects (R1), and that in a transfer position said retainer means 60) with catcher means (63) shifts the intermediate row of objects (R1) to the conveyor (7) whereupon the buffering belt (51) pushes the next row of objects (R2) to said retainer means (60) for being maintained in said retaining position.

7. Device according to Claim 6, **characterized in that** the retainer means (60) laterally backs up about the upper half of the row of objects (R1) in said retaining position, and that the retainer means (60) is moved into releasing position with the aid of a lifting drive (60H), brought into a position parallel to the inclined row of objects (R1) by means of an inclining drive (60N), moved into a separating position by means of a lowering drive (60S) and moved into the transfer and retaining position by means of a vertical setter means (60V).

8. Device according to Claim 7, **characterized in that** the lifting drive (60H) that comprises said lowering drive (60S) and said inclining drive (60N) with vertical setter means (60V) is formed by a central kinematic mechanism or two combined movement controlled drives.

9. Device according to Claim 7, **characterized in that** the retainer means (60) has an end (60U) that is rounded or fitted with rollers.

10. Device according to any of the preceding Claims 6 to 9, **characterized in that** the catcher means (63) is a swivel plate which with its front face extends almost completely over the row of objects (R1) to be buffered while being moved from the releasing position into the vertical transfer position and the catcher means (63) being swung around a swivel axis (63A) which is flush with an outside face of the linear conveyor (7).

11. Device according to any of the preceding Claims 6 to 10, **characterized in that** the retaining and discharging device (6) comprises an edge stopper (65) disposed between the buffering belt (51) and the linear conveyor (7) and provided with a lifting drive (65H) and a lowering drive (65S) which act to lift said edge stopper (65) above the level of the buffering belt (51) flush with the retaining unit (60) in the retaining position only and otherwise to lower it below said level.

12. Device according to any of the preceding Claims 6 to 11, **characterized in that** the buffering belt (51) is in the retaining position being driven until a row of objects (R1) contacts the retainer means (60).

13. Device according to any of the preceding Claims 6 to 12, **characterized in that** the retainer unit (60) is brought from the releasing position to the separating position (position 4) each time a light barrier (61) detects the gap (L) behind the tipped row of objects (R1).

14. Device according to any of the preceding Claims 1 to 4, **characterized in that** the retaining and discharging device (6) comprises a row of suction cups (67) on a vacuum suction ledge or plate (66) with a pushing drive (66S) to keep same in a retaining position on the buffering belt (51) until a succeeding row of objects (R1) has come up to said suction cups (67) and that said vacuum ledge or plate (66) is connected to a pulling drive (66Z) which pulls said ledge or plate up on the linear conveyor (7) or the linear intermediate conveyor (9) together with the row of objects (R1) upon vacuum generation wherein said row of objects is released by vacuum elimination and wherein said ledge or plate is restored to the retaining position by the pushing drive (66S) after said row of objects has been carried away by the linear conveyor (9).

## Revendications

1. Dispositif pour le stockage intermédiaire de plusieurs objets du même genre, qui présentent chacun une surface de base rectangulaire, en particulier de cartons pour boissons, en provenance d'une ligne de transport, sur au moins une voie de stockage (5) commandée par un état d'engorgement, à l'entrée et à la distribution, sachant que chaque voie de stockage (5, 5A, 5B) consiste en une bande de stockage qui est disposée à côté de la ligne de transport (1) et qui est entraînée dans une direction de transport (BF), ladite bande de stockage présentant une largeur (B), qui correspond au moins à une longueur d'une rangée (R1-R1N) de plusieurs objets à l'état d'engorgement, et dont la longueur de transport (FL) offre, dans la direction de transport (BF) de la bande, une zone de stockage, recevant plusieurs rangées d'objets (R1 - R1N ... R4 - R4N), qui sont délivrées les unes après les autres,
**caractérisé en ce que**, dans la ligne de transport (1), sur le côté centrée de la bande de stockage (51), un coulisseau (4) de dégagement et, sur le côté distribution de la bande de stockage (51), un dispositif de prélèvement (6, 6A, 6B) pour chaque fois une rangée en attente d'objets (R1, R1') sont agencés sur un transporteur linéaire (7) ou sur un transporteur linéaire intermédiaire (9), qui transportent perpendiculairement à celle-ci.

2. Dispositif selon la revendication 1, **caractérisé en ce que** le transporteur linaire (7) est relié à la ligne de transport, par l'intermédiaire d'un branchement (8), en aval du dispositif de retenue et de distribution.

3. Dispositif selon la revendication 1, **caractérisé en ce qu'**au moins deux des voies de stockage (5A, 5B) sont chaque fois disposées, par paire, l'une à côté de l'autre, en étant entraînés en sens contraire, et que le transporteur intermédiaire (9) est relié, sur le côté distribution de la première voie de stockage (5A) de la paire, au moyen du dispositif de retenue et de distribution (6A), et, sur le côté entrée de la seconde voie de stockage (5B) de la paire, à un autre coulisseau de dégagement de rangée (4B), et que la deuxième voie de stockage (5B) est reliée côté distribution à la ligne de transport (1) au moyen d'un deuxième dispositif de retenue et de distribution (6B).

4. Dispositif selon la revendication 1, **caractérisé en ce que**, sur la ligne de transport (1), sont agencés, en aval du coulisseau de dégagement de rangée (4), un arrêt de ligne (2) commandé et, en amont, un frein de ligne (3).

5. Dispositif selon la revendication 4, **caractérisé en ce que** l'arrêt de ligne (2) est toujours activé quand une perturbation est détectée en aval, et le frein de ligne (3) est ensuite toujours activé quand une rangée complète d'objets (R4-R4N) est accumulée devant le coulisseau de dégagement de ligne (4), et que le coulisseau de dégagement de ligne (4) est ensuite activé et, lorsque celui-ci a délivré sa rangée, lui et le frein de ligne (3) sont désactivés.

6. Dispositif selon la revendication 1, **caractérise en ce que** la bande de stockage (51) est conduite, sur le côté distribution, autour d'un renvoi, et que le dispositif de retenue et de distribution (6)
- dans une position de retenue, ne soutient chaque fois les rangées d'objets (R1, R1') accumulées, à l'aide d'un organe de retenue (60) décalé par rapport au renvoi (50), que sur moins de la moitié de leur surface de base (64G), et
- dans une position de libération, l'organe de retenue (60) est soulevé au-dessus de la rangée d'objets (R1), de telle sorte que celle-ci s'incline vers le transporteur linéaire (7) où elle est maintenue obliquement par un organe de réception (63) et un intervalle est formé par rapport à la rangée d'objets suivante (R2), et
- dans une position de séparation, l'organe de retenue (60) est abaissé derrière la rangée d'objets (R1) inclinée, le cas échéant dans l'intervalle (L), et
- dans une position de transfert, l'organe de retenue (60), avec l'organe de réception (63), amène sur le transporteur (7), la rangée d'objets (R1), qui se trouve entre eux, ce après quoi la bande de stockage (51) déplace la rangée d'objets suivante (R2) jusqu'à l'organe de retenue (60) en position de retenue.

7. Dispositif selon la revendication 6, **caractérisé en ce que** l'organe de retenue (60) soutient latéralement, sensiblement la moitié supérieure de la rangée d'objets (R1), et est amené dans la position de libération par une command de levée (60H) et, par une commande d'inclinaison (60N), dans une position parallèle à la rangée d'objets inclinée (R1), et par une commande de descente (60S), dans la position de séparation, et par un organe de positionnement vertical (60V) dans la position de transfert et de retenue.

8. Dispositif selon la revendication 7, **caractérisé en ce que** la commande de levée (60H), la commande de descente (60S), ainsi que la commande d'inclinaison (60N) avec le l'organe de positionnement vertical (60v) sont réalisés par un mécanisme cinématique central ou consistent en deux commandes de déplacement combinées.

9. Dispositif selon la revendication 7, **caractérisé en ce que** l'organe de retenue (60) est doté d'une extrémité (60U) arronde ou pourvue de roulettes.

10. Dispositif selon l'une des revendications 6 à 9, **caractérisé en ce que** l'organe de réception (63) est une plaque montée à pivotement, qui s'étend, frontalement, presque complètement sur la rangée d'objets (R1) à stocker, tandis que celle-ci est amenée de la position de libération basculée à la position verticale de transfert, sacrant que l'organe de réception (63) est pivoté autour d'un axe de picotement (63A), qui est en alignement avec un bord extérieur du transporteur linéaire (7).

11. Dispositif selon l'une des revendications 6 à 10, **caractérisé en ce que** le dispositif de retenue et de distribution (6) comprend un organe d'arrêt de bord (65), qui est disposé entre la bande de stockage (51) et le transporteur linéaire (7), et est relié à une commande de levée (65H) et à une commande de descente (65S) qui, chaque fois, ne soulève l'organe d'arrêt de bord (65) au dessus du niveau de la bande de stockage (51), en alignement avec l'organe de retenue (60), que dans la position de retenue et, autrement, l'abaisse au-dessous de celui-ci.

12. Dispositif selon l'une des revendications 6 à 11, **caractérisé en ce que**, dans la position de retenue, la bande de stockage (51) est chaque fois entraînée jusqu'à ce qu'une rangée d'objets (R1) soit jointive avec l'organe de retenue (60).

13. Dispositif selon l'une des revendications 6 à 12, **caractérisé on ce que** l'organe de retenue (60) est amené de la position de libération dans la position de séparation (Pos.4) quand une barrière lumineuse (61) détecte l'intervalle (L) derrière la rangée d'objets (R1) basculée.

14. Dispositif selon l'une des revendications 1 à 4, **caractérisé en ce que** le dispositif de retenue et de distribution (6) consiste en une rangée de coupelles d'aspiration (67), qui sont aménagée sur une baguette ou une plaque à dépression (66), avec une commande de poussée (66S), qui la maintient dans une position de retenue sur la bande de stockage (51) jusqu'à ce que la rangée d'objets (R1) suivante butte contre les coupelles d'aspiration (67), et **en ce que** la baguette ou la plaque à dépression (66) est reliée à une commande de traction (66z), qui tire celle-ci sur le transporteur linéaire (7) ou sur le transporteur intermédiaire (9), en commun avec la rangée d'objets (R1) après activation de la dépression, libère la rangée d'objets (R1) par suppression de la dépression et qui, après que ladite rangée d'objets ait été évacuée par le transporteur intermédiaire (9), est repoussée dans la position de retenue par la commande de poussée (66S).
